# EUROPÄISCHE PATENTSCHRIFT

(11) **EP 1 092 104 B1**
(45) Veröffentlichungstag und Bekanntmachung des Hinweises auf die Patenterteilung: **06.08.2003**
(21) Anmeldenummer: 99939318.4
(22) Anmeldetag: 14.06.1999
(51) Int. Cl.: F16J 1/16

(54) **KOLBENBOLZENBUCHSE**
PISTON-PIN BUSHING
COUSSINET D'AXE DE PISTON

(30) Priorität: 27.06.1998 DE 19828847
(43) Veröffentlichungstag der Anmeldung: 18.04.2001
(73) Patentinhaber: Federal-Mogul Wiesbaden GmbH & Co.KG, 65201 Wiesbaden (DE)
(72) Erfinder: DAMOUR, Philippe, D-60489 Frankfurt (DE)
(74) Vertreter: Fuchs Mehler Weiss & Fritzsche
(86) Internationale Anmeldenummer: DE9901736
(87) Internationale Veröffentlichungsnummer: WO00000761

(56) Entgegenhaltungen:
- DE-C- 4 325 903
- FR-A- 2 756 882
- GB-A- 1 577 352

## Beschreibung

Die Erfindung betrifft eine Kolbenbolzenbuchse gemäß dem Oberbegriff des Patentanspruchs 1.

Kolbenbolzenbuchsen sind beispielsweise aus der US-PS-4,909,638 und DE-OS 28 18 378 bekannt, die sich beide mit der Herstellung der Buchsen, insbesondere der Verklinkung, befassen. Derartige Buchsen werden zur Lagerung des Pleuelauges in auf- und abbewegten Kolben von Verbrennungsmotoren eingesetzt. Es werden sowohl Parallelbuchsen als auch Trapezbuchsen beschrieben, die Ölbohrungen sowie an der Innenfläche befindliche Ölnuten aufweisen können. Diese Ölnuten stellen zwar eine Materialschwächung dar, allerdings sind sie lediglich in das auf dem Stahlrücken aufgebrachte Gleitlagermaterial eingebracht, so daß die Materialschwächung der gesamten Buchse derart gering ist, daß sie keinen Einfluß auf den Radialdruck hat. Dasselbe gilt auch für die Ölbohrungen, deren Durchmesser derart gering ist, daß die elastischen und plastischen Eigenschaften der Buchse nicht beeinflußt werden. Ferner erstrecken sich die Ölnuten über den gesamten Innenumfang.

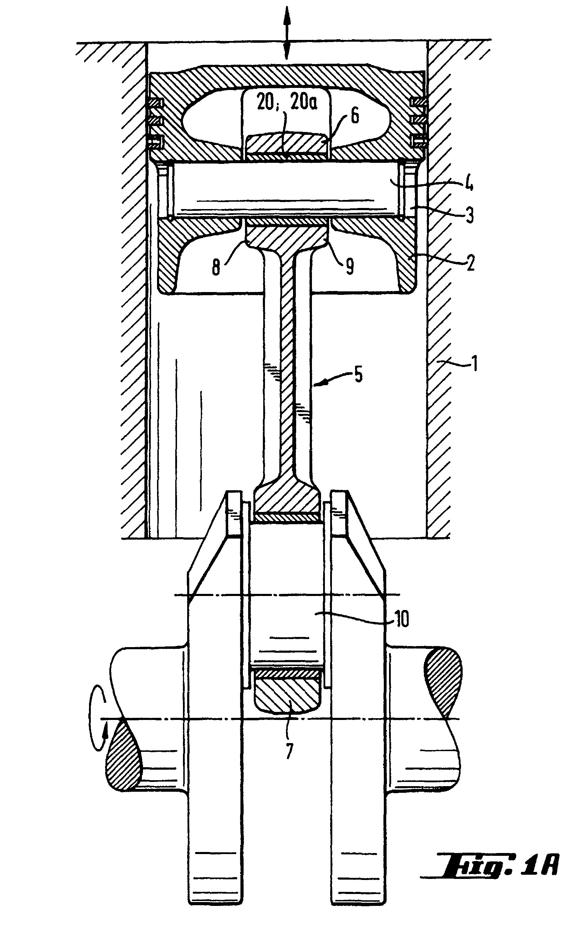

In der Fig. 1A ist für eine Parallelbuchse 20,20a die Einbaulage schematisch dargestellt, die auch für die noch zu erläuternde erfindungsgemäße Buchse gilt. Der Kolben 2 führt im Zylinder 1 eine auf- und abgehende Bewegung aus, die auf die Pleuelstange 5 und den im großen Pleuelauge 7 gelagerten Hubzapfen 10 der Kurbelwelle übertragen wird. Die Pleuelstange 5 nimmt in dem kleinen Pleuelauge 6 eine Kolbenstangenbuchse 20 auf, in welcher der Kolbenbolzen gelagert ist, der sich mit seinen beiden Enden in die beiden Kolbenbohrungen 3 erstreckt.

In der Fig. 1B sind für die hoch belasteten Motoren, um die bei der Abwärtsbewegung des Kolbens auftretenden größeren Kräfte besser aufnehmen zu können, die Kolbenbolzenbuchsen 20b, 20c im Längsschnitt im wesentlichen trapezförmig ausgebildet, wobei der axial längere Abschnitt der Buchse im Bereich der Maximalbelastung während des Betriebs liegt und der axial kürzere Teil der Buchse dem Kolben zugewandt ist. Durch die Verwendung von Buchsen mit solchen abgeschrägten Enden kann bei diesem Anwendungsfall eine in Hauptlastrichtung größere und somit wirkungsvollere Lagerfläche erzielt werden als mit Buchsen, deren Enden senkrecht zur Lagerachse der Buchse verlaufen. Bei derartigen Buchsen können sowohl beide Endflächen als auch nur eine Endfläche oder auch nur ein Abschnitt der Endfläche zur Längsachse der Buchse geneigt sein. In Fig. 1B sind solche halben Trapezkolbenbuchsen 20c in beiden Kolbenbohrungen 3 eingesetzt, in denen die Kolbenbolzen nicht mehr direkt in den Kolbenbohrungen sondern in den beiden Kolbenbolzenbuchsen 20c gelagert sind.

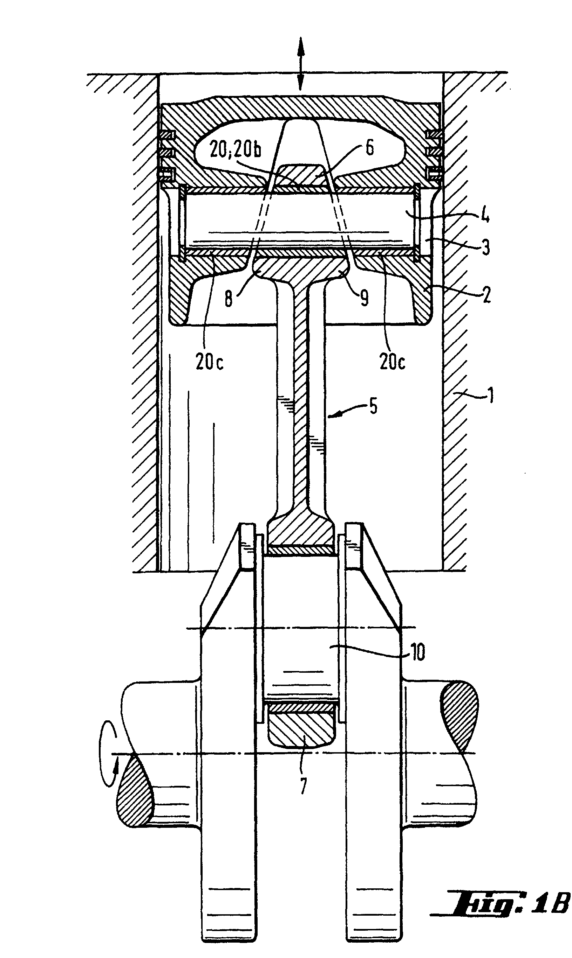

Die Kolbenbolzenbuchse 20, 20b wird mit Preßsitz in das kleine Pleuelauge 6 eingebaut, so daß aufgrund des Kontaktes die Kolbenbolzenbuchse einen radialen Druck auf die Pleuelbohrung ausübt, der in axialer Richtung einen in etwa parabolischen Verlauf hat, wie er in der Fig. 2 für den Bereich der beiden Scheitellinien 23 und 24 durch die Kurven I und II dargestellt ist.

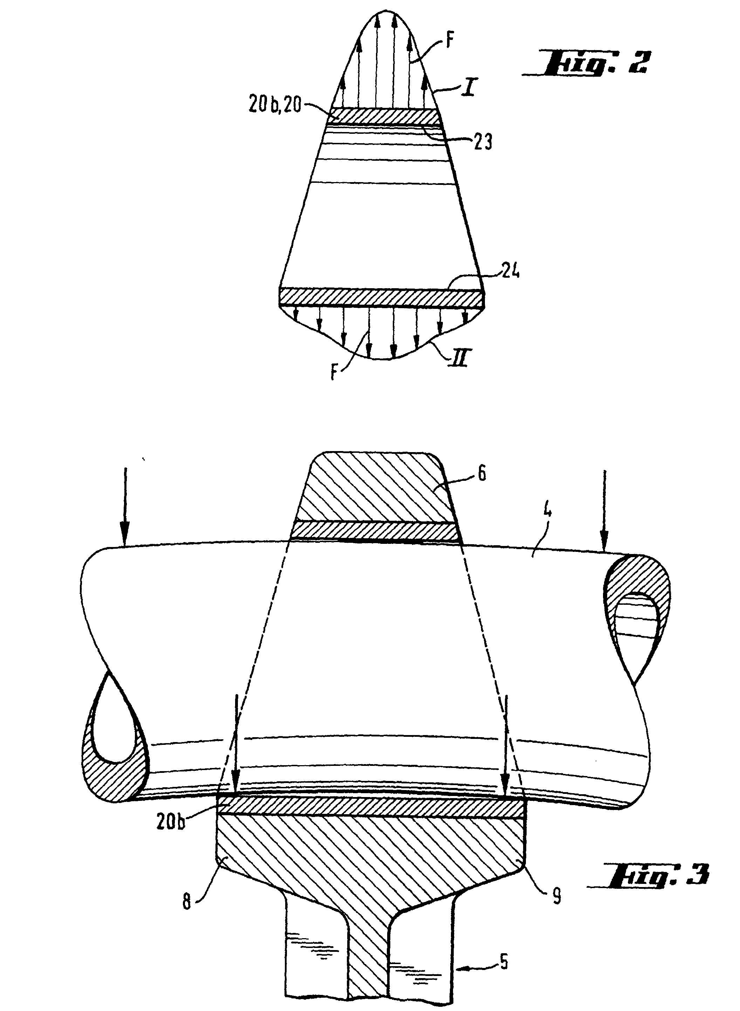

Der Kontaktdruck nimmt zum Rand hin ab, wo die Kolbenbolzenbuchse 20 bei der Abwärtsbewegung des Kolbens 2 unter Berücksichtigung der elastischen Verformung des Kolbenbolzens jedoch am stärksten belastet wird, wie dies in der Fig. 3 zur Verdeutlichung in übertriebener Darstellung zu sehen ist. Der Kolbenbolzen 4 wird somit durch den Druck des Kolbens etwas durchgebogen. so daß die Kolbenbolzenbuchse 20 im Randbereich am stärksten belastet wird, wodurch die beiden Enden 8 und 9 des kleinen Pleuelauges 6 nach unten nachgeben.

Hierbei entsteht zwischen Buchsenkörper und Pleuelauge eine Relativbewegung, die zur Reibkorrosion führt. Wenn die Last weggenommen wird, federt die Buchse in ihre Ausgangslage zurück und hebt somit vom Pleuelkörper ab, so daß an diesen Stellen Öl unter den Buchsenkörper eindringen kann. Beide Effekte tragen dazu bei, daß die Lebensdauer der Kolbenbolzenbuchse verringert wird.

Da im Automobilbau aufgrund von Direkteinspritzung und Turboaufladung bei Dieselmotoren zwecks Reduzierung des Treibstoffverbrauchs bzw. zur Erreichung der vorgeschriebenen Abgaswerte der maximale Zylinderdruck gesteigert worden ist, hat auch die Belastung der Kolbenbolzenbuchse und des Pleuels im Bereich des Pleuelauges zugenommen mit der Folge, daß im Randbereich des axial längeren Abschnitts der Kolbenbolzenbuchse an der Rückseite Reibkorrosion und an der Innenseite Rißbildungen aufgetreten sind, die die Lebensdauer der Kolbenbolzenbuchse erheblich beeinträchtigen.

Obwohl in der Vergangenheit versucht wurde, durch spezielle Bearbeitung der Bohrung, Präzisionseinbau und Optimierung der Geometrie des Pleuelauges, die Verhältnisse zu verbessern, konnten die Probleme noch nicht zufriedenstellend gelöst werden.

In der FR 2 756 882 A1 wird eine Trapezbuchse beschrieben, die in zwei Übergangsbereichen zwischen ihren Schnittlinien jeweils eine Materialveringerung aufweist. Die Materialverringerungen sind als Öltaschen ausgelegt. Bei ihrer Form und Tiefe sind aber auch die Beanspruchungen zur berücksichtigen, denen die Kolbenachse ausgesetzt ist.

Ausgehend von diesen Erkenntnissen ist es Aufgabe der Erfindung, eine Kolbenbolzenbuchse zu schaffen, die auch bei höheren Kolbendrücken eine ausreichende Lebensdauer aufweist.

Diese Aufgabe wird mit einer Kolbenbolzenbuchse gemäß Anspruch 1 gelöst.

Die erfindungsgemäße Kolbenbolzenbuchse ist eine Trapezbuchse, wobei unter Trapezbuchse auch solche Buchsen verstanden werden, bei denen lediglich ein Ende abgeschrägt ist. Trapezbuchsen werden in der Weise eingebaut, daß die erste Scheitellinie im axial kürzeren Abschnitt und die zweite Scheitellinie im axial längeren Abschnitt liegt.

Es hat sich gezeigt, daß sich durch diese Maßnahmen die Rißbildung und die Reibkorrosion deutlich verringerten, was darauf zurückzuführen ist, daß durch die Materialverminderung die Kontaktdruckverteilung im Bereich der Scheitellinien in der Weise verändert wird, daß einerseits keine Bewegung in Längsrichtung der Buchse stattfindet und daß andererseits kein vorzeitiges Zurückfedern der Buchse bei Wegnahme der Belastung eintritt. Durch den erhöhten Radialdruck im Endbereich der Buchse haftet der Buchsenkörper am Pleuel, so daß Relativbewegungen nicht auftreten können.

Um die Tragfläche der Kolbenbolzenbuchse nicht zu beeinträchtigen, ist die Materialverringerung auf einen Übergangsbereich zwischen den beiden Scheitellinien zu begrenzen, wobei man aus Symmetriegründen vorzugsweise in den beiden möglichen Übergangsbereichen zwischen den beiden Scheitellinien die erfindungsgemäßen Maßnahmen ergreift.

Vorzugsweise kann der Übergangsbereich auf der Innenseite und/oder der Buchsenaußenseite mindestens eine Tasche aufweisen. Die flächenmäßige Ausdehnung und Form der Tasche ebenso wie die Tiefe der Tasche oder der Taschen muß derart gewählt werden, daß sich die erfindungsgemäße Radialdruckerhöhung im Bereich der Buchsenenden einstellt. Herkömmliche Taschen werden lediglich in das Gleitlagermaterial eingebracht. Erfindungsgemäß ist es jedoch von Vorteil, wenn sich diese Taschen, die auf der Buchseninnenseite vorgesehen sind, sich bis in den Buchsenrücken erstrecken, weil auf diese Art und Weise die gewünschte Materialschwächung erzielt werden kann.

Zur Herstellung der Taschen muß das Buchsenmaterial, worunter sowohl das Material des Buchsenrückens als auch das Gleitlagermaterial verstanden wird, entfernt werden. Ein Prägevorgang ist zur Herstellung von solchen Taschen nicht geeignet, weil das aus den Taschen verdrängte Material zu einer Versteifung und damit zu einer unerwünschten Beeinflussung der elastischen und plastischen Eigenschaften des Buchsenmaterials führt, so daß sich keine Erhöhung des Radialdrucks im Bereich der Buchsenenden einstellen kann.

Die Materialverminderung zum Zweck des Überschreitens der Fließgrenze im eingebauten Zustand der Buchse, d.h. beim herkömmlichen Preßsitz im Pleuelauge, kann bis zur vollständigen Entfernung des Buchsenmaterials gehen. Insofern kann die Buchse nicht nur Taschen aufweisen, sondern auch Durchbrechungen, wobei Taschen und Durchbrechungen kombiniert sein können. Diese Kombination schließt die Möglichkeit ein, die Durchbrechungen im Bereich der Taschen oder außerhalb der Taschen vorzusehen.

Bezüglich der Größe und der Formgebung solcher Durchbrechungen gelten dieselben Kriterien wie für die Taschen.

Vorzugsweise erstreckt sich der Übergangsbereich in Umfangsrichtung über einen 100°-Sektor. Der Übergangsbereich ist vorteilhafterweise zwischen 30° und 50° von einer der Scheitellinien entfernt.

Bei den trapezförmigen Buchsen ist der Übergangsbereich bzw. die Übergangsbereiche an die Trapezform in der Weise angepaßt, daß die Breite des Übergangsbereichs in Richtung von der ersten Scheitellinie zur zweiten Scheitellinie zunimmt. Die Abmessungen richten sich vorteilhafterweise nach den Längen der unterschiedlich langen Scheitellinien. Bei einer Trapezbuchse ist daher der Übergangsbereich vorzugsweise mindestens 1₁/4 in der Nähe der ersten Scheitellinie und mindestens 1₂/4 in der Nähe der zweiten Scheitellinie vom Buchsenrand entfernt.

Dies führt vorzugsweise zu einer dreieckförmigen Anordnung bzw. Ausbildung von Taschen und/oder Durchbrechungen, wobei Anzahl und Form der Taschen und/oder Durchbrechungen beliebig gewählt werden können. Die Taschen und/oder Durchbrechungen können auch im Bereich von Ölnuten liegen oder mit diesen in Verbindung stehen, so daß die Taschen und/oder Durchbrechungen auch als Ölreservoir dienen können, was einen zusätzlichen positiven Effekt mit sich bringt.

Beispielhafte Ausführungsformen der Erfindung werden nachfolgend anhand der Zeichnungen erläutert.

Es zeigen:
- Fig. 1A: einen Längsschnitt durch einen Zylinder mit Kolben, Pleuel und Parallelbuchse,
- Fig. 1B: einen Längsschnitt durch einen Zylinder mit Kolben, Pleuel und Trapezbuchse,
- Fig. 2: die radiale Druckverteilung einer Kolbenbolzenbuchse (Trapezbuchse) nach dem Stand der Technik,
- Fig. 3: eine vergrößerte Darstellung des kleinen Pleuelauges gemäß der Fig. 1B unter Belastung,
- Fig. 4: perspektivische Darstellung einer erfindungsgemäßen Kolbenbolzenbuchse.
- Fig. 5: die radiale Druckverteilung für die in der Fig. 4 gezeigte Kolbenbolzenbuchse.
- Fig. 6: einen Schnitt durch eine Kolbenbolzenbuchse mit unterschiedlichen Taschen und Durchbrechungen.
- Fig. 7A: einen Axialschnitt durch eine Trapezbuchse mit eingezeichnetem Übergangsbereich.
- Fig. 7B: einen Axialschnitt durch eine Trapezbuchse mit eingezeichnetem Übergangsbereich gemäß einer weiteren Ausführungsform, und
- Fign. 8-17: Schnitte durch Kolbenbolzenbuchsen unterschiedlicher Ausführungsformen.

In der Fig. 1B ist die Einbaulage der Kolbenbolzenbuchse 20 dargestellt, die in der Fig. 4 in perspektivischer Darstellung zu sehen ist. Es handelt sich in der hier gezeigten Ausführungsform um eine trapezförmige Buchse 20b mit einem axial kürzeren Abschnitt 21 und einem axial längeren Abschnitt 22. Beide Ränder 26,27 der Kolbenbolzenbuchse 20b sind zur Längsachse geneigt. Die beiden Scheitellinien 23 und 24 liegen im axial kürzeren Abschnitt 21 an der schmalsten Stelle bzw. im axial längeren Abschnitt an der breitesten Stelle.

Zwischen diesen beiden Scheitellinien 23 und 24 gibt es zwei Übergangsbereiche 30a und 30b, die sowohl von den Scheitellinien 23 und 24 als auch von den jeweiligen Rändern der Kolbenbolzenbuchse 26 und 27 beabstandet sind. Innerhalb der Übergangsbereiche 30a und 30b gibt es einen Flächenbereich, in dem eine Verminderung des Buchsenmaterials vorgenommen wurde. In der hier gezeigten Ausführungsform wurde das Material vollständig entfernt, so daß Durchbrechungen 31 entstanden sind, die eine flaschenförmige Kontur aufweisen, wobei die Breite der Durchbrechung von der ersten Scheitellinie 23 in Richtung zur zweiten Scheitellinie 24 zunimmt.

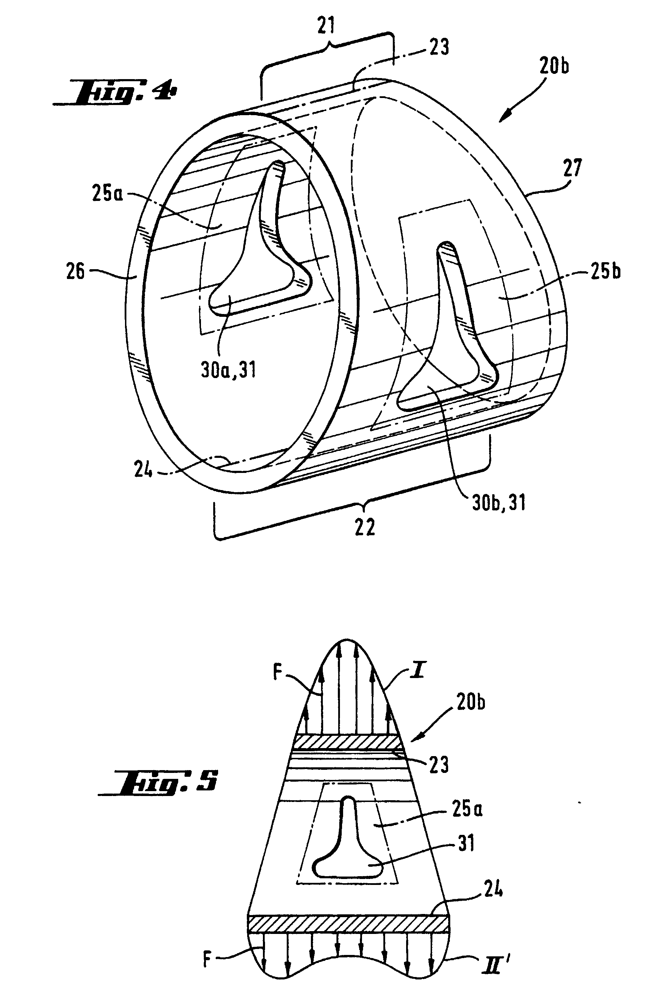

Die resultierende Druckverteilung beim Einbau in ein Pleuel ist in der Fig. 5, entsprechend der Darstellung der Fig. 2, zu sehen. Aufgrund der Durchbrechung 31 verändert sich die Druckverteilung im Bereich des axial längeren Abschnitts 22 in der Weise, daß die radialen Druckkräfte F zum Rand hin zunehmen und erst kurz vor dem Rand abfallen. Man erhält eine Doppelhöckerkurve II'. Diese veränderte Druckverteilung bewirkt, daß ein ausreichender Preßsitz der Kolbenbolzenbuchse auch bei Maximalbelastung durch den Kolbendruck vorhanden ist. Hierdurch wird sichergestellt, daß die Buchse 20b im axial längeren Bereich nicht unter der Wirkung der dynamischen Belastung von den Enden 8 und 9 des kleinen Pleuelauges abhebt mit der Folge, daß Reibkorrosion verhindert wird.

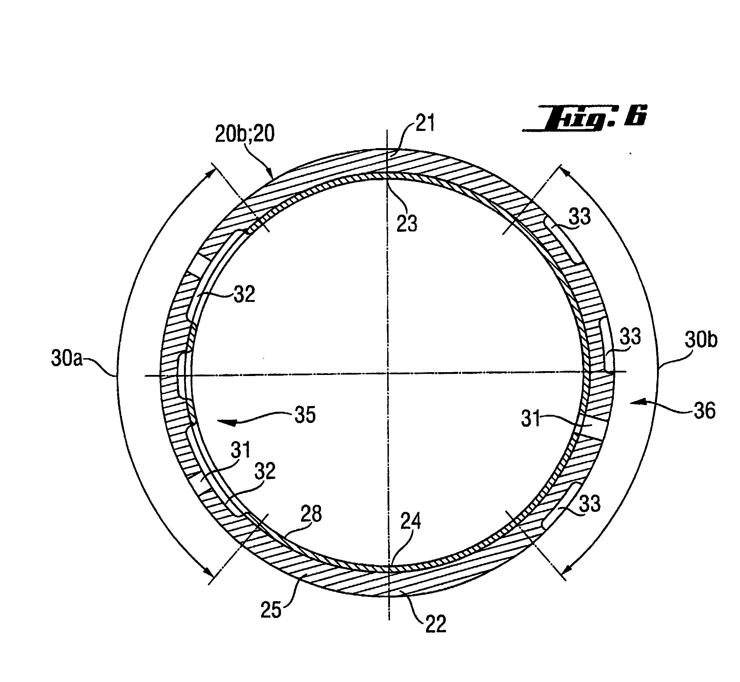

In der Fig. 6 ist ein Querschnitt durch eine Kolbenbolzenbuchse 20 dargestellt, anhand derer die verschiedenen Möglichkeiten der Materialverringerung erläutert werden sollen. Die Kolbenbolzenbuchse besitzt einen Buchsenrücken 25. der auf der Innenfläche ein Gleitlagermaterial 28 trägt. Im linken Bereich der Kolbenbolzenbuchse 20 sind an der Innenseite 35 Taschen 32 vorgesehen. wobei im Bereich dieser Taschen zusätzlich noch Durchbrechungen 31 angeordnet sind. Die radiale Erstreckung der Taschen 32 richtet sich nach der Wanddicke und den Materialeigenschaften der Kolbenbolzenbuchse 20. Die Taschen 32 müssen so groß sein, daß beim Einbau, d.h. beim Preßsitz sich die gewünschte radiale Druckkräfteverteilung - wie in Fig. 5 dargestellt-im Bereich des axial längeren Abschnitts 24 einstellen kann.

Auf der rechten Seite sind Taschen 33 an der Außenseite 36 der Kolbenbolzenbuchse vorgesehen, die ebenfalls mit Durchbrechungen 31 kombiniert sein können. Diese Durchbrechungen 31 können ebenfalls neben, zwischen oder in den Taschen 33 liegen. Die Anzahl und Form der Taschen und/oder der Durchbrechungen sowie deren Anordnung und der Grad der Materialverringerung richten sich nach den Eigenschaften der Buchsenmaterialien und der Kräfteverteilung, die durch die Formgebung der Buchse beeinflußt werden soll.

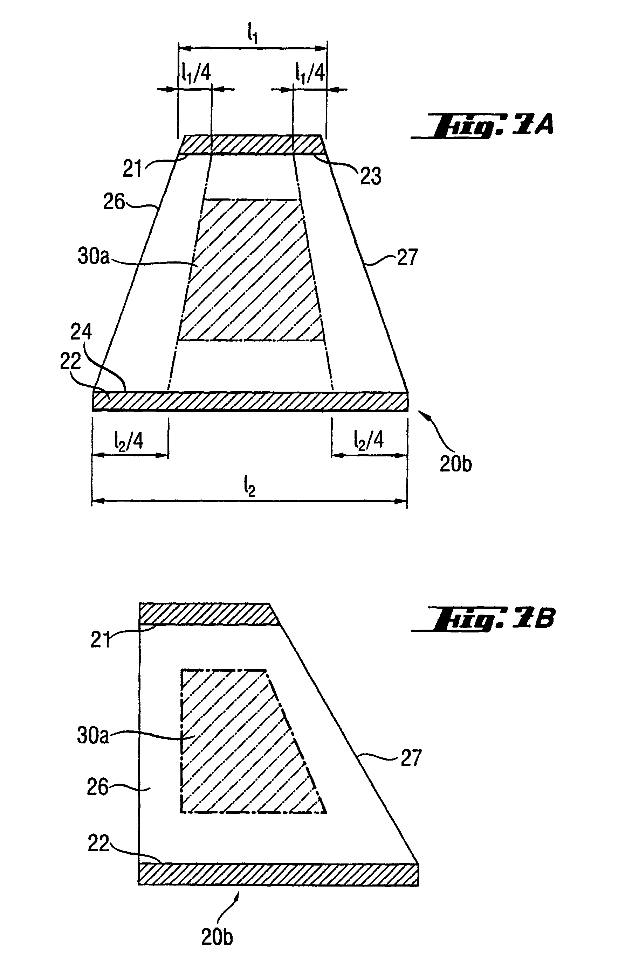

In den Fign. 6, 7a,b ist der Übergangsbereich 30a, 30b an der Innenseite zweier im Längsschnitt dargestellter Buchsen 20b eingezeichnet. Ein bevorzugter Übergangsbereich 30a,b kann über den Winkelbereich sowie über die Länge l₁ bzw. l₂ des axial kürzeren Abschnitts 21 bzw. des axial längeren Abschnitts 22 definiert werden. Danach überdeckt der Übergangsbereich 30a,b einen Sektor von 100°, der jeweils 40° von der ersten und der zweiten Scheitellinie 23,24 entfernt ist. Damit wird sichergestellt, daß der axial kürzere bzw. axial längere Abschnitt 21,22 im Bereich der Maximalbelastung nicht durch Materialverminderung geschwächt ist. Die Materialverminderung wird somit auf einen Übergangsbereich beschränkt, der nicht von der Maximalbelastung betroffen ist. Der Abstand von den Rändern 26 und 27 der Kolbenbolzenbuchse ist ≥ l₁/4, wobei in der hier gezeigten Ausführungsform der Randstreifen vom Wert l₁/4 auf den Wert l₂/4 kontinuierlich zunimmt.

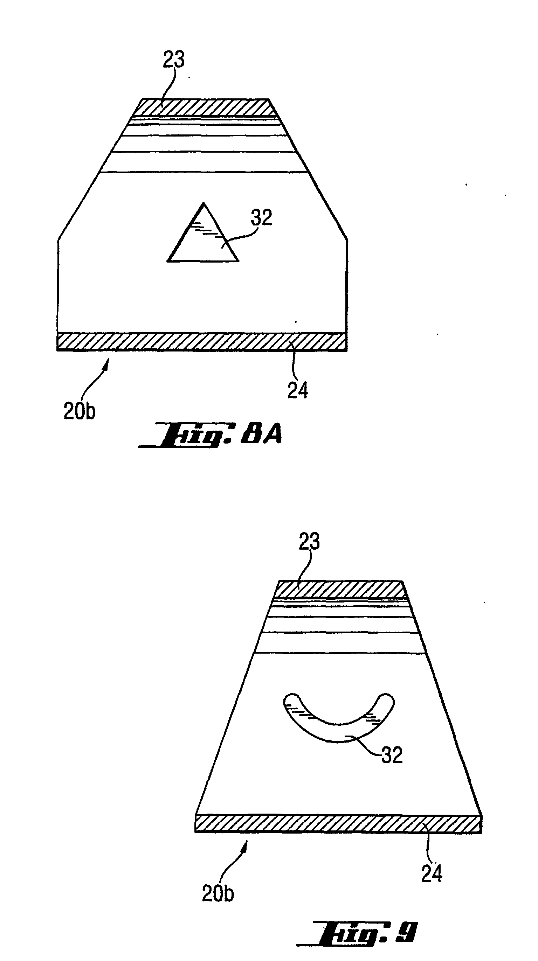

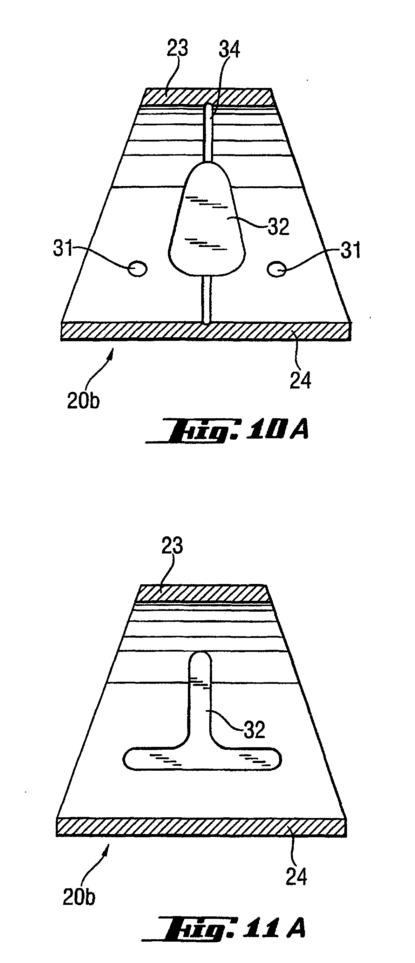

In den Fign. 8A bis 17 sind weitere Ausführungsformen dargestellt. In der Fig. 8A ist eine Kolbenbolzenbuchse 20 zu sehen, bei der die Endabschnitte nur teilweise abgeschrägt sind. Im Übergangsbereich ist eine dreieckförmige Vertiefung 32 dargestellt. In der Fig. 9 ist eine bogenförmige Tasche 32 und in der Fig. 10A eine Kombination aus einer Tasche 32 und Durchbrechungen 31 dargestellt. Die Durchbrechungen 31 sind im unteren Bereich in der Nähe des axial längeren Abschnitts eingebracht. Die Form der Tasche 32 ist im wesentlichen dreieckförmig und in der hier gezeigten Ausführungsform steht die Tasche 32 mit einer Ölnut 34 in Verbindung.

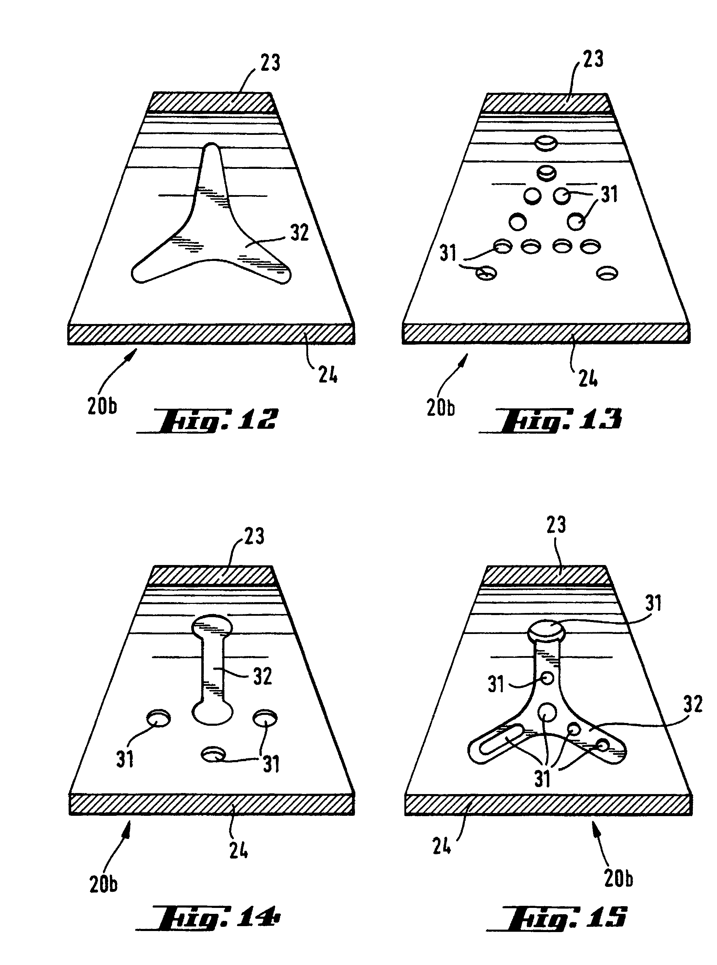

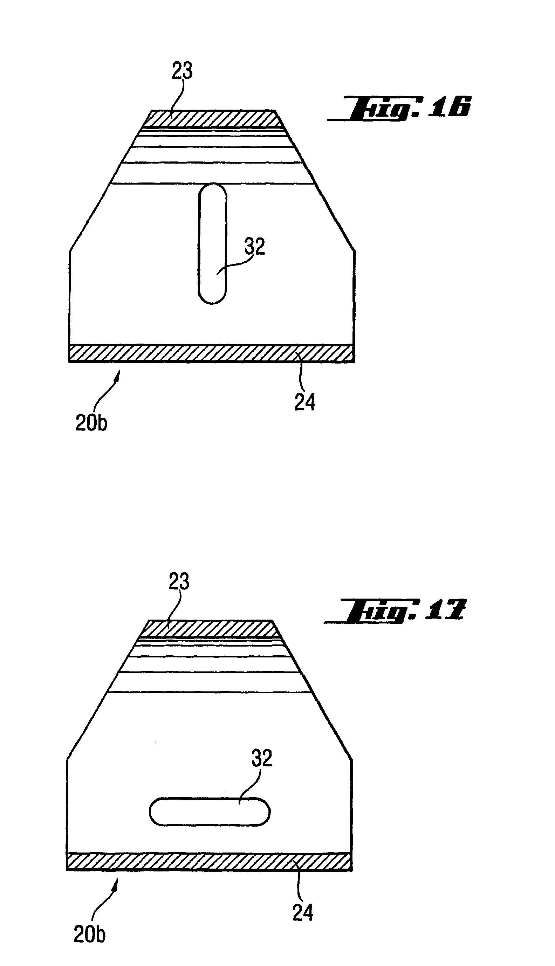

In der Fig. 11A ist eine T-förmige Tasche 32 und in der Fig. 12 eine sternförmige Tasche 32 dargestellt. Die Fig. 13 zeigt eine Anordnung von mehreren kreisförmigen Durchbrechungen 31, die zusammen die Konfiguration des Buchstabens A ergeben.

In der Fig. 14 ist eine Tasche 32 mit kreisförmigen Durchbrechungen 31 kombiniert.

In der Fig. 15 befinden sich die Durchbrechungen 31 im Bereich der sternförmigen Innentasche 32.

In den Fign. 16 und 17 sind Buchsen 20 dargestellt, deren Außenkanten den in Fig. 8A gezeigten Buchse entsprechen. Es sind längliche Durchbrechungen 32 vorgesehen, die sich in axialer bzw, in Umfangsrichtung erstrecken.

### Bezugszeichen

- 1: Zylinder
- 2: Kolben
- 3: Kolbenbohrung
- 4: Kolbenbolzen
- 5: Pleuelstange
- 6: kleines Pleuelauge
- 7: großes Pleuelauge
- 8: Ende des kleinen Pleuelauges
- 9: Ende des kleinen Pleuelauges
- 10: Hubzapfen der Kurbelwelle
- 20: Kolbenbolzenbuchse
- 20a: Parallelbuchse
- 20b: Trapezbuchse
- 20c: Trapezbuchse
- 21: axial kürzerer Abschnitt
- 22: axial längerer Abschnitt
- 23: erste Scheitellinie
- 24: zweite Scheitellinie
- 25: Buchsenrücken
- 26: Rand der Kolbenbolzenbuchse
- 27: Rand der Kolbenbolzenbuchse
- 28: Gleitlagermaterial
- 30a,b: Übergangsbereich
- 31: Durchbrechung
- 32: Tasche
- 33: Tasche
- 34: Ölnut
- 35: Buchseninnenseite
- 36: Buchsenaußenseite

## Patentansprüche

1. Kolbenbolzenbuchse (20b,20c) mit Buchsenrücken und Gleitlagermaterial, mit zwei gegenüberliegenden, im eingebauten Zustand die Hauptlast aufnehmenden Scheitellinien (23,24) und mit Bereichen, in denen das Buchsenmaterial mindestens verringert ist, **dadurch gekennzeichnet,**
**daß** sie eine Trapezbuchse (20b,20c) ist, deren axial kürzerer Abschnitt (21) die erste Scheitellinie (23) und deren axial längerer Abschnitt (22) die zweite Scheitellinie (24) bildet,
**daß** der Bereich der Materialverringerung auf mindestens einen Übergangsbereich (30a,b) zwischen den Scheitellinien (23,24) beschränkt ist, wobei die Breite des Übergangsbereiches (30a,b) in Richtung von der ersten Scheitellinie (23) zur zweiten Scheitellinie (24) zunimmt, und
**daß** das Buchsenmaterial in diesem Übergangsbereich mindestens soweit verringert ist, daß im eingebauten Zustand ein Teil des Radialdruckes der Kolbenbolzenbuchse (20,20a,20b,20c) im Bereich der Scheitellinien (23,24) von der Mitte im Bereich der beiden Buchsenenden (26,27) verlagert ist.

2. Kolbenbolzenbuchse nach Anspruch 1, **dadurch gekennzeichnet, daß** der Übergangsbereich (30a,b) auf der Buchseninnenseite (35) und/oder der Buchsenaußenseite (36) mindestens eine Tasche (32,33) aufweist.

3. Kolbenbolzenbuchse nach Anspruch 2, **dadurch gekennzeichnet, daß** die sich auf der Buchseninnenseite befindliche Tasche (32) bis in den Buchsenrücken (25) erstreckt.

4. Kolbenbolzenbuchse nach einem der Ansprüche 1 bis 3, **dadurch gekennzeichnet, daß** der Übergangsbereich (30a,b) mindestens eine Durchbrechung (31) aufweist.

5. Kolbenbolzenbuchse nach einem der Ansprüche 1 bis 4, **dadurch gekennzeichnet, daß** der Übergangsbereich (30a,b) sich in Umfangsrichtung über einen 100°-Sektor erstreckt.

6. Kolbenbolzenbuchse nach Anspruch 5, **dadurch gekennzeichnet, daß** der Übergangsbereich (30a,b) zwischen 30° und 50° von einer der Scheitellinien (23,24) entfernt ist.

7. Kolbenbolzenbuchse nach einem der Ansprüche 6, **dadurch gekennzeichnet, daß** der Übergangsbereich (30a,b) mindestens 1₁/4 in der Nähe der ersten Scheitellinie (23) und mindestens 1₂/4 in der Nähe der zweiten Scheitellinie (24) vom Buchsenrand (26,27) entfernt ist, wobei 1₁ und 1₂ die Länge der ersten Scheitellinien (23) und der zweiten Scheitellinie (24) ist.

## Claims

1. A piston pin bushing (20b, 20c) with bushing back and sliding bearing material, with two opposite apex lines (23, 24) that take up the main load in the installed state, and with regions, in which the bushing material is at least reduced,
**characterized in that**
the piston pin bushing consists of a trapezoidal bushing (20b, 20c), the axially shorter section (21) of which forms the first apex line (23) and the axially longer section of which forms the second apex line (24),
**in that** the region of the reduced material is limited to at least one transition region (30a, b) between the apex lines (23, 24), wherein the width of the transition region (30a, b) increases in the direction from the first apex line (23) to the second apex line (24),
and **in that** the bushing material is reduced at least to such a degree in this transition region that, in the installed state, a portion of the radial pressure of the piston pin bushing (20, 20a, 20b, 20c) is shifted from the center into the region of the two bushing ends (26, 27) within the region of the apex lines (23, 24).

2. The piston pin bushing according to Claim 1, **characterized in that** the transition region (30a, b) contains at least one pocket (32, 33) on the inner side (35) of the bushing and/or the outer side (36) of the bushing.

3. The piston pin bushing according to Claim 2, **characterized in that** the pocket (32) situated on the inner side of the bushing extends into the bushing back (25).

4. The piston pin bushing according to one of Claims 1-3, **characterized in that** the transition region (30a, b) contains at least one through-opening (31).

5. The piston pin bushing according to one of Claims 1-4, **characterized in that** the transition region (30a, b) extends over a 100º sector in the circumferential direction.

6. The piston pin bushing according to Claim 5, **characterized in that** the transition region (30a, b) is spaced apart from one of the apex lines (23, 24) by an angle between 30º and 50º.

7. The piston pin bushing according to one of Claims 6, **characterized in that** the transition region (30a, b) is spaced apart from the bushing edge (26, 27) by at least l₁/4 in the vicinity of the first apex line (23) and by at least l₂/4 in the vicinity of the second apex line (24), wherein l₁ and l₂ represent the lengths of the first apex line (23) and the second apex line (24).

## Revendications

1. Coussinet d'axe de piston (20b, 20c) comprenant un dos de coussinet et une matière de palier à glissement, comportant deux lignes sommitales (23, 24) opposées absorbant, à l'état monté, la charge principale et des zones où la matière de coussinet est au moins réduite,
**caractérisé en ce que**
il est un coussinet trapézoïdal (20, 20c), dont la section la plus courte axialement (21) constitue la première ligne sommitale (23) et dont la section la plus longue axialement (22) constitue la deuxième ligne sommitale (24),
que la zone de réduction de matière est limitée à au moins une zone de transition (30a, b) entre les lignes sommitales (23, 24), la largeur de la zone de transition (30a, b) augmentant dans le sens de la première ligne sommitale (23) vers la deuxième ligne sommitale (24), et
que la matière de coussinet est, dans cette zone de transition, au moins réduite de telle sorte qu'à l'état monté une partie de la pression radiale du coussinet d'axe de piston (20, 20a, 20b, 20c) au niveau des lignes sommitales (23, 24) soit transférée à partir du centre au niveau des deux extrémités du coussinet (26, 27).

2. Coussinet d'axe de piston selon la revendication 1, **caractérisé en ce que** la zone de transition (30a, b) présente, sur la face interne du coussinet (35) et/ou la face externe du coussinet (36), au moins une poche (32, 33).

3. Coussinet d'axe de piston selon la revendication 2, **caractérisé en ce que** la poche se trouvant sur la face interne du coussinet (32) s'étend jusque dans le dos du coussinet (25).

4. Coussinet d'axe de piston selon l'une quelconque des revendications 1 à 3, **caractérisé en ce que** la zone de transition (30a, b) présente au moins une percée (31).

5. Coussinet d'axe de piston selon l'une quelconque des revendications 1 à 4, **caractérisé en ce que** la zone de transition (30a, b) s'étend dans le sens circonférentiel sur un secteur de 100°.

6. Coussinet d'axe de piston selon la revendication 5, **caractérisé en ce que** la zone de transition (30a, b) est éloignée de 30° à 50° d'une des lignes sommitales (23, 24).

7. Coussinet d'axe de piston selon la revendication 6, **caractérisé en ce que** la zone de transition (30a, b) est éloignée d'au moins l₁/4 à proximité de la première ligne sommitale (23) et d'au moins l₂/4 à proximité de la deuxième ligne sommitale (24) du bord du coussinet (26, 27), l₁ et l₂ étant la longueur de la première ligne sommitale (23) et de la deuxième ligne sommitale (24).
